# EUROPEAN PATENT APPLICATION

(11) **EP 2 261 800 A1**
(43) Date of publication of application: **15.12.2010**
(21) Application number: 09162349.6
(22) Date of filing: 10.06.2009
(51) Int. Cl.: G06F 9/50

(54) **Multi instance virtual server**

(71) Applicant: SIEMENS AKTIENGESELLSCHAFT, 80333 München (DE)
(72) Inventor: Dallera, Antonio, 16148 Genua (IT); Giuffrida, Guido, 16129 Genua (IT)
(74) Representative: Fischer, Michael

(57) **Abstract**

System for managing at least one communication between at least one client (31, 32, 33) and at least one physical real server (21, 22, 23, 24, 25, 26), the system comprising:
- at least one interprocess communication component (1) that provides a virtual instance for server process to at least one client (31, 32, 33);
- means (4) for associating at least one client (31, 32, 33) to the communication component (1);
- means (4) for associating said communication component (1) to at least one physical server (21, 22, 23, 24, 25, 26);
- means for sending, from said client (31, 32, 33) to said communication component (1), a command for a server object creation;
- means comprised in said communication component (1) for creating said server object and returning to said client (31, 32, 33) a reference to the object;
- means for sending a request (Q1, Q2, Q3) from the client (31, 32, 33) to the communication component (1), said request being related to said reference;
- means comprised in said communication component (1) for routing said request (Q1, Q2, Q3) to at least one of said physical servers;
- means for executing said request by at least one of said physical servers (21, 22, 23, 24, 25, 26);
- means for returning a result of the request from at least one of said physical servers (21, 22, 23, 24, 25, 26) to the communication component (1);
- means for transmitting said result, from said communication component (1) to said client (31, 32, 33).

## Description

The present invention relates to a method and a system for managing clients-servers communications, with a configurable level of security and flexibility.

In a wide range of software architectures and in particular in the environment of a Manufacturing Executing System (MES) for which processes are for example planned by an Enterprise Resource Planning (ERP) and produced by a technical process line, i.e. a system supporting the control of single machines involved in the analysis processes, there are many applications which produce, load or exchange data. In such an environment, a common setting in data processing consists in distributed computers with client program/application usually requesting services from server computers.

A typical example of distributed computer environment is given by the ERP and MES working. The MES is an intermediate layer providing computing machines and software tools between a ERP upper layer and a process line lower layer, including a software tool for analysis management, which receives requests of analysis from the ERP, and a software tool for productive process, which supports the phases of selecting and managing the resources to be involved in the productive processes, i.e. employees, machines and materials, in order to realize a planned analysis process within required time constraints. The ERP is also a system including hardware devices and corresponding software applications for planning the business resources of an enterprise, i.e. material provisions, human resource managements, purchasing, orders, profits, finance, inventory controls, customer managements, etc. Consequently, multiple different clients such as computers and/or mobile devices can connect to multiple servers to request different services in order to allow a correct working of the ERP-MES systems. Physical clients and servers devices usually communicate on the application layer via high-level communication protocols over a computer network infrastructure or environment, giving rise consequently to a client server architecture. The communication between a client and a server allows for example to exchange or transfer data or requests, to execute commands or requests, to transmit results of command, to record data in some database, etc.

A client application based on traditional client server architecture, with for example one or more clients contacting one fixed server, may present some problems when requesting a service or a task from the server:
- the server could be busy, if for example there are too many concurrent client application requests. It usually results in an internal error encountered by the server, which becomes unable to satisfy a supplementary client application request;
- the server may be also unavailable due to network failures or crashes.

Due to these problems, the client application may not have its needed service or task executed for even a long time period. For example, according to the kind of the service provided by the server, the unavailability of said provided service may result in malfunctionalities or block in production plants. Moreover, beside the above-mentioned problems, typical client server architectures present also other critical points that have to be taken into account by the client application:
- server discovery, i.e. server localization in a complex network: in particular, clients must be aware, where their server runs;
- server overload: for some periods of time, the server is not able to satisfy a client request because it is already working on another client time consuming task, which results in a status of overloaded server;
- scalability limitations: a client server architecture comprising only one server presents scalability limitations which may results in particular in overloaded or busy server;

- client server disconnection: if a disconnection occurs, the client must take care of implementing a reconnection policy;
- high coding complexity: to support concurrent execution of tasks from multiple clients, a server application must be developed paying attention to multithreading problems and resources synchronizations, leading to a high coding complexity.

Up to know, partial solutions of the above-mentioned problems were provided by hard coded applications and algorithms, which present the disadvantage of requiring a change of a program source code any time an input data or a client server architecture changes, whereas it might be more convenient to an end user to update the changes by means that are outside of said program. Moreover, said solutions were based on fixed configurations that present the disadvantage of reducing application flexibility and portability, i.e. its ability to execute properly on multiple hardware platforms. Effectively, in fixed configurations, a specific request is usually satisfied by a fixed server that has to be well known in terms of computer name, running location, Internet Protocol address, etc, or if a load balancing algorithm is developed to treat the requests, the latter will be treated and satisfied only through a fixed numbers of possible servers.

It is therefore an objective of the present invention to provide a method and a system for managing clients-servers communications with a configurable level of security and flexibility, and which avoid, all the above-mentioned problems. In particular, the present invention proposes to solve the above-mentioned problems without using hard coded applications or algorithms, as well as fixed configurations.

The objective is achieved according to the present invention with respect to the method by a method for managing at least one communication between at least one client and at least one physical real server, the method comprising the steps of:
- associating at least one client to at least one virtual instance of a server process, so that they are able to communicate;
- associating said virtual instance to at least one physical server, so that they are able to communicate;
- sending, from said client to said virtual instance, a command for a server object creation;
- creating said server object by said virtual instance and returning to said client a reference to the object;
- using said reference to send a request from the client to the virtual instance;
- routing said request to at least one of said physical servers;
- executing said request by at least one of said physical servers;
- returning a result of the request from at least one of said physical servers to the virtual instance;
- transmitting said result, from said virtual instance to said client.

The objective is achieved according to the present invention with respect to the system by a system for managing at least one communication between at least one client and at least one physical real server, the system comprising:
- at least one interprocess communication component that provides a virtual instance for server process to at least one client;
- means for associating at least one client to the communication component, so that their are able to communicate;
- means for associating said communication component to at least one physical server, so that they are able to communicate;
- means for sending, from said client to said communication component, a command for a server object creation;
- means comprised in said communication component for creating said server object and returning to said client a reference to the object;
- means for sending a request from the client to the communication component, said request being related to said reference;
- means comprised in said communication component for routing said request to at least one of said physical servers;
- means for executing said request by at least one of said physical servers;
- means for returning a result of the request from at least one of said physical servers to the communication component;
- means for transmitting said result, from said communication component to said client.

In one embodiment of the present invention, the virtual instance analyses the request of the client in order to determine which physical server is the best suited to execute the request. Said analyse is in particular advantageously done by means for analyzing comprised in the communication component. In particular, a result of this analyze of the request is the ability of the virtual instance of the communication component to select at least one server that is well suited for the request, in particular physical servers that declare themselves able to satisfy the request. Criteria for server selection are based for example on the working charge or managing capacity of the server, on its availability, or also on its performance. Moreover, for executing a particular client command or request, the communication component is able, through its virtual instance, to choose or select the best suited server, among a group of servers that may satisfy the request, according to configurable and auto adaptive policies. Advantageously, the request is then routed by the communication component through the virtual instance, either to at least one of said selected servers, or only to said selected servers, which will advantageously result in a fast processing of the request.

Advantageously, according to a preferred embodiment of the present invention, if no physical server is registered for a request, or if all available servers are in an overloaded status, the virtual instance allows to configure a persistence level of the request, so that, as soon as a server is available or within a ready status, the request is routed to the available server and executed. In particular, a default level of security is defined by the system working as fast as it can to treat a request by using fast communication layer. Then the level of security is configurable for example by switching to a higher level of security by using a communication layer implementing said persistence of the request. The choice between the default level or a higher level is in particular done by the client, which can choose the desired level of security.

In another embodiment of the present invention, the virtual instance provides a handling of different levels of flexibility in managing the requests of the clients. For example, all the requests of a particular client might be satisfied by one unique physical server, or, in another realization, each request of the client is satisfied by different physical servers, that have been, in particular, selected previously through said analyse.

According to another embodiment of the invention, client requests are grouped together in a transaction group, in particular if they have items or characteristics in common, in order to ensure that the transaction group, i.e. every request composing the transaction group, either succeeds or fails in its request. Moreover, the virtual instance is able to create several instances of the same server object in order to avoid concurrency problems and multithread servers.

According to a preferred embodiment of the invention, the virtual instance provides an effective diagnostic to a client application user to keep at least one trace of the client application requests, a service state and some statistics. Said service state might be for example various kinds of warnings like "instance overloaded", or characteristics of the state like "state ok", while said statistics present for example the number of client connected to a server, the rate of output or input of various information such as the requests.

According to another preferred embodiment of the invention, the virtual instance comprises configurable parameters, so that a tuning of said configurable parameters of the virtual instance allows:
- a pre-selection of at least one physical server, so that all the requests of a client application are dedicated to one unique pre-selected physical server, or to a group of pre-selected servers;
- a timeout for storing unsatisfied requests or commands: if, for example, there are no physical servers available at a specific time, the communication component is able through its virtual instance to return an error to the client application of the client, or to store the command for a specified timeout, while waiting for an available server.
- to satisfy requirements of at least a physical server, like for example a connection of a small number of clients, or the transmission of a small number of requests.

Finally, the main advantages of the present invention compared to previous servers-clients communications management are:
- the possibility to develop distributed applications in a simple and flexible way, through the use of the virtual instance of a server process provided by the interprocess communication component that takes care of all problems involved in the client-server relation, like server discovery, reaction to server unavailability, load balancing, message routing, etc,
- the saving of multithread servers development,
- to avoid concurrency problems arising from concurrent requests by the creation of more instances of the same server object handled by the virtual instance,
- a simple implementation of a client application which can focus on its particular tasks without taking care of infrastructural problems,

### Brief description of the drawings

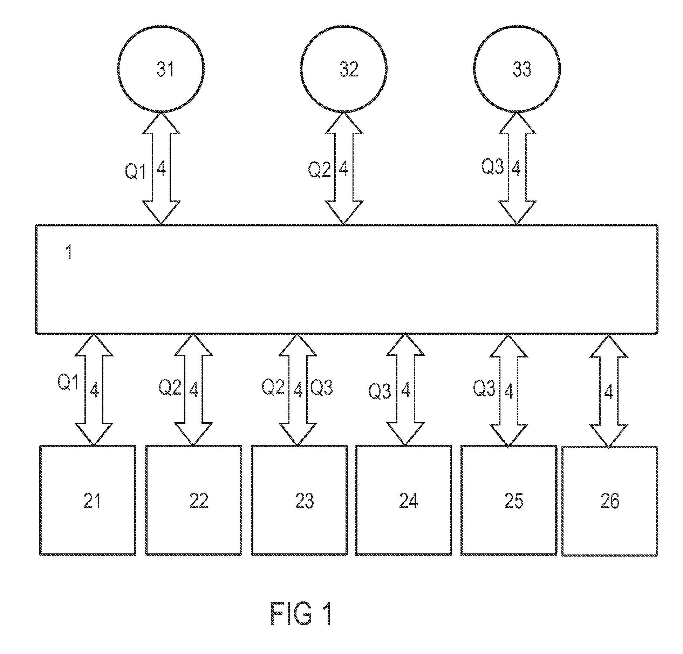

- Figure 1: schematically represents an example of client-server communication management.

### Detailed description

Figure 1 schematically represents an example of client-server communication management. Some clients (31, 32, 33) and some physical servers (21, 22, 23, 24, 25, 26), in particular a dynamic pool of physical servers, are associated, through means (4) for associating servers and clients, to an interprocess communication component (1), which provides a virtual instance - that might be called a virtual server - for server processes to at least one of the clients (31, 32, 33). The associating means (4) might be for example cable connection (wiring), remote connection, etc., that are typically used in network architecture and allow a communication between different devices and corresponding applications. Physical servers and clients are also typical devices used in a network environment.

Before that the physical servers (21, 22, 23, 24, 25, 26) execute or treat any requests of the clients (31, 32, 33), the communication component (1) has to receive from the client application of said client, at least one command for creating at least one server object that will run on the virtual server for each client. Then, the communication component (1) returns to said clients (31, 32, 33) a reference to their running object. Once the clients (31, 32, 33) get said reference, it becomes then possible for them to use said object in a completely transparent way, invoking methods or accessing variables as if it was obtained in a standard way through a physical server.

Consequently, once said objects are created, the communication component (1) receives some requests (Q1, Q2, Q3), related to said reference and sent from at least one client application of said clients (31, 32, 33), or from distributed client applications that have different levels of priority. By receiving the requests (Q1, Q2, Q3), the communication component (1) will successively:
a) analyse the request type;
b) find across the network one or more physical servers (21, 22, 23, 24, 25) registered to satisfy the requests. In particular, the dynamic pool of distributed servers (21, 22, 23, 24, 25, 26) handled by the communication component (1) declare themselves if they are able or not to satisfy the requests;
c) route each request, by means of routing, to the server that, among all servers able to satisfy said request, can handle the request in the best way, by matching for example parameters like current work load, resources use, etc.,
d) if required, send an answer to the client with its request issue and results that have been returned to the communication component (1) by at least one of the physical servers (21, 22, 23, 24, 25).

In particular, the communication component (1) is able to configure a high priority client (31) having all its tasks or requests (Q1) executed by one dedicated server instance (21), while other clients (32, 33), with lower priority levels, are served by one or several default server instances (22, 23, 24, 25), which are, in any case, able to satisfy their requests (Q2, Q3). In particular, one client application (33) might be related to a group of physical servers (23, 24, 25), so that the communication component (1) routes its requests only to servers owning to the said group.

## Claims

1. Method for managing at least one communication between at least one client (31, 32, 33) and at least one physical server (21, 22, 23, 24, 25, 26), the method comprising the steps of:
- associating at least one client (31, 32, 33) to at least one virtual instance of a server process;
- associating said virtual instance to at least one physical server (21, 22, 23, 24, 25, 26);
- sending, from said client to said virtual instance, a command for a server object creation;
- creating said server object by said virtual instance and returning to said client a reference to the object;
- using said reference to send a request (Q1, Q2, Q3) from the client (31, 32, 33) to the virtual instance;
- routing said request (Q1, Q2, Q3) to at least one of said physical servers (21, 22, 23, 24, 25, 26);
- executing said request (Q1, Q2, Q3) by at least one of said physical servers (21, 22, 23, 24, 25, 26);
- returning a result of the request from at least one of said physical servers (21, 22, 23, 24, 25, 26) to the virtual instance;
- transmitting said result, from said virtual instance to said client (31, 32, 33).

2. Method according to claim 1, further comprising the step of analysing the request (Q1, Q2, Q3) of the client (31, 32, 33) in order to determine which physical server (21, 22, 23, 24, 25, 26) is the best suited to execute the request.

3. Method according to claim 2, further comprising the step of selecting said best suited server according to configurable and auto adaptive policies.

4. Method according to claim 3, whereby the request (Q1, Q2, Q3) is routed to at least one of said selected servers.

5. Method according to any of the preceding claims 1 to 4, further comprising the step of configuring a persistence level of the request (Q1, Q2, Q3).

6. Method according to any of the preceding claims 1 to 5, further comprising the step of providing a handling of different levels of flexibility in managing the requests (Q1, Q2, Q3) of the clients (31, 32, 33).

7. Method according to any of the preceding claims 1 to 6, further comprising the step of grouping the client requests together in a transaction group.

8. Method according to any of the preceding claims 1 to 7, whereby several instances of the same server object are created.

9. Method according to any of the preceding claims 1 to 8, further comprising the step of keeping at least one trace of the client requests and a service state.

10. System for managing at least one communication between at least one client (31, 32, 33) and at least one physical real server (21, 22, 23, 24, 25, 26), the system comprising:
- at least one interprocess communication component (1) that provides a virtual instance for server process to at least one client (31, 32, 33);
- means (4) for associating at least one client (31, 32, 33) to the communication component (1);
- means (4) for associating said communication component (1) to at least one physical server (21, 22, 23, 24, 25, 26);
- means for sending, from said client (31, 32, 33) to said communication component (1), a command for a server object creation;
- means comprised in said communication component (1) for creating said server object and returning to said client (31, 32, 33) a reference to the object;
- means for sending a request (Q1, Q2, Q3) from the client (31, 32, 33) to the communication component (1), said request being related to said reference;
- means comprised in said communication component (1) for routing said request (Q1, Q2, Q3) to at least one of said physical servers;
- means for executing said request by at least one of said physical servers (21, 22, 23, 24, 25, 26);
- means for returning a result of the request from at least one of said physical servers (21, 22, 23, 24, 25, 26) to the communication component (1);
- means for transmitting said result, from said communication component (1) to said client (31, 32, 33).

11. System according to claim 10, further comprising means for analysing said request.

12. System according to claims 11 or 12, whereby the communication component (1) is able to choose the best-suited server for executing a particular client request.

13. System according to any of the preceding claims 10 to 12, whereby the virtual instance allows to configure a persistence level of the request (Q1, Q2, Q3).

14. System according to any of the preceding claims 10 to 13, whereby the virtual instance provides a handling of different levels of flexibility in managing the requests (Q1, Q2, Q3) of the clients (31, 32, 33).

15. System according to any of the preceding claims 10 to 14, whereby the virtual instance provides an effective diagnostic to a client application user to keep at least one trace of the client requests and a service state.
